# EUROPÄISCHE PATENTANMELDUNG

(11) **EP 2 927 477 A1**
(43) Veröffentlichungstag der Anmeldung: **07.10.2015**
(21) Anmeldenummer: 15162269.3
(22) Anmeldetag: 01.04.2015
(51) Int. Cl.: F03B 17/06, F03D 3/06, F03D 3/04

(54) **ROTOR UND FLUIDTURBINE MIT ROTOR**

(30) Priorität: 03.04.2014 DE 102014104726
(71) Anmelder: Cassius Advisors GmbH, 48157 Münster (DE)
(72) Erfinder: Behrens, Michael, 48157 Münster (DE)
(74) Vertreter: Werner & ten Brink

(57) **Zusammenfassung**

Es wird ein Rotor 16 mit einer vertikalen Drehachse 12 und mindestens zwei Rotorblättern 18, 20, 22, die an der Drehachse 12 angeordnet sind, vorgeschlagen, wobei mindestens ein Rotorblatt 18, 20, 22 eine Öffnung 60 mit einem öffenbaren Schließelement 62 umfasst. An einer Oberkante 137 und/oder an einer Unterkante 138 von mindestens einem Rotorblatt 18, 20, 22 ist jeweils mindestens ein Flügelelement 80 beweglich angeordnet. Der Rotor 16 weist aufgrund der Gestaltung des Rotorblatts 18, 20, 22 einen besonders hohen Wirkungsgrad auf.

## Beschreibung

Die vorliegende Erfindung bezieht sich auf einen Rotor mit einer vertikalen Drehachse und mindestens zwei Rotorblättern, die an der Drehachse angeordnet sind, wobei jedes Rotorblatt einen gekrümmten ersten Abschnitt umfasst, wobei der erste Abschnitt eine konkave Seite und eine konvexe Seite aufweist. Sie bezieht sich weiterhin auf eine Fluidturbine mit einem solchen Rotor, wobei der Rotor in einem Gehäuse angeordnet ist, und wobei eine Oberseite und eine Unterseite des Gehäuses im wesentlichen senkrecht zur Drehachse angeordnet sind.

Derartige Rotoren werden zur Energiegewinnung aus Wasser-, Luft- oder anderen Fluidströmungen verwendet. Bei einem solchen Rotor bewegt sich im Betrieb jeweils mindestens ein Rotorblatt in Richtung oder mit der Fluidströmung und mindestens ein Rotorblatt bewegt sich entgegen der Richtung der Fluidströmung oder gegen die Fluidströmung. Aus der DE 20 2004 017 309 U1 ist beispielsweise ein Windkraftrotor mit einem um eine vertikale Achse drehbaren Rotor bekannt, dessen Rotorblätter in mehrere halbschalenförmig Teilblätter unterteilt sind. Zwischen den Teilblättern sind vertikale Spalten für einen Durchtritt der Luft angeordnet.

Aus der RU 2418 191 C1 geht ein Windrotor mit Rotorblättern hervor, die Öffnungen mit Klappen umfassen. Die Klappen öffnen oder verschließen die Öffnung je nachdem, von welcher Seite die Windströmung darauf trifft, so dass sich eine bevorzugte Drehrichtung des Windrotors ergibt.

Es ist eine Aufgabe der vorliegenden Erfindung, einen Rotor anzugeben, der einen hohen Wirkungsgrad aufweist.

Diese Aufgabe wird dadurch gelöst, dass bei einem Rotor mit einer vertikalen Drehachse und mindestens zwei Rotorblättern, die an der Drehachse angeordnet sind, wobei mindestens ein Rotorblatt mindestens eine Öffnung mit einem öffenbaren Schließelement umfasst, vorgesehen ist, dass an einer Oberkante und/oder an einer Unterkante von mindestens einem Rotorblatt jeweils mindestens ein Flügelelement beweglich angeordnet ist.

Das Schließelement ist an einer Seite des Rotorblatts derart angeordnet, dass das Schließelement die Öffnung aufgrund der Fluidströmung öffnet, wenn sich das Rotorblatt gegen die Fluidströmung bewegt. Dadurch wird der Strömungswiderstand des Rotorblatts bei Rückführung gegen die Fluidströmung verringert. Das Schließelement ist außerdem derart angeordnet, dass es die Öffnung aufgrund der Fluidströmung schließt, wenn sich das Rotorblatt in Richtung der Fluidströmung bewegt. Auf diese Weise bleibt der Strömungswiderstand des Rotorblatts bei der Aufnahme der Fluidströmung genauso hoch wie ohne die mindestens eine Öffnung des Rotorblatts. Dies wirkt sich positiv auf den Wirkungsgrad des Rotors aus. Das Flügelelement ist derart angeordnet, dass es, wenn die Fluidströmung auf die Vorderseite des Rotorblatts trifft, hochklappt und auf diese Weise die Fläche des Rotorblatts vergrößert. Dadurch kann die Fluidströmung noch besser von dem Rotorblatt aufgenommen werden. Bei der Rückführung des Rotorblatts gegen die Fluidströmung klappt das Flügelelement aufgrund der Fluidströmung, die auf die Rückseite des Flügelelements trifft, in Richtung der Vorderseite des Rotorblatts, so dass keine zusätzliche Fläche entsteht und das Rotorblatt bei Bewegung gegen die Fluidströmung somit keinen größeren Strömungswiderstand aufweist. Auf diese Weise kann der Wirkungsgrad des Rotors noch weiter verbessert werden.

Das Flügelelement ist bevorzugt derart ausgebildet, dass es von der Fluidströmung nicht über die Ober- bzw. Unterkante hinaus in den Bereich der Rückseite des Rotorblatts gedrückt werden kann. Es kann beispielsweise mittels einer Schwenkachse schwenkbar angelenkt sein und/oder aus einem elastischen Material gefertigt sein. Es kann sich bevorzugt entlang eines oder mehrerer Teilabschnitte oder durchgängig entlang der gesamten Länge der Ober- und/oder Unterkante des ersten Abschnitts des Rotorblatts erstrecken. Besonders bevorzugt umfassen mehrere oder jedes Rotorblatt jeweils mindestens ein Flügelelement.

Bevorzugt umfasst jedes Rotorblatt mindestens eine Öffnung mit einem öffenbaren Schließelement. Dadurch wird ein besonders gleichmäßiger Betrieb des Rotors begünstigt.

In vorteilhaften Ausführungsformen umfasst mindestens ein Rotorblatt einen gekrümmten ersten Abschnitt, wobei der erste Abschnitt eine konkave Seite und eine konvexe Seite aufweist, wobei an dem der Drehachse abgewandten Ende des ersten Abschnitts des Rotorblatts ein gekrümmter zweiter Abschnitt angeordnet ist, wobei der zweite Abschnitt eine konkave Seite und eine konvexe Seite aufweist, und wobei die beiden Abschnitte derart angeordnet sind, dass in radialer Richtung auf die konvexe Seite des ersten Abschnitts die konkave Seite des zweiten Abschnitts folgt. Ein Vorteil dieser Ausführungsform ist, dass durch die Anordnung des zweiten Abschnitts an dem ersten Abschnitt des Rotorblatts auf der konvexen Seite des ersten Abschnitts und der konkaven Seite des zweiten Abschnitts des Rotorblatts, im Folgenden zusammen auch als Vorderseite des Rotorblatts bezeichnet, besonders am der Drehachse abgewandten Ende des Rotorblatts, ein besonders hoher Widerstand für eine dort auftreffende Fluidströmung entsteht. Da die Hebelwirkung dort nämlich am größten ist, findet dort die größte Kraftübertragung statt, so dass das Rotorblatt besonders effektiv in Richtung der Fluidströmung bewegt wird. Dagegen ist die sich gegen die Richtung der Fluidströmung bewegende Seite des Rotorblatts aufgrund der konkaven Seite des ersten Abschnitts und der konvexen Seite des zweiten Abschnitts, im Folgenden zusammen auch als Rückseite des Rotorblatts bezeichnet, besonders am der Drehachse abgewandten Ende des Rotorblatts, aerodynamischer und weist einen geringeren Strömungswiderstand auf.

Bei dieser Ausführungsform ist die mindestens eine Öffnung mit dem öffenbaren Schließelement bevorzugt im ersten Abschnitt des Rotorblatts angeordnet. Da die Fluidströmung größtenteils auf den ersten Abschnitt einwirkt, bewirkt eine Optimierung des Strömungswiderstands dieses Abschnitts besonders eine Verbesserung des Wirkungsgrads des Rotors.

Vorteilhafterweise ist ein zwischen der konvexen Seite des ersten Abschnitts und der konkaven Seite des zweiten Abschnitts eingeschlossener Winkel kleiner als 120°, z. B. 110° oder 100°, bevorzugt kleiner als 90°, z. B. 80°. Dadurch entsteht eine schaufelartige Form des mindestens einen Rotorblatts, in die die Fluidströmung gelenkt wird und die der Fluidströmung einen erhöhten Strömungswiderstand entgegensetzt, so dass ein Großteil der Fluidströmung zur Kraftübertragung genutzt werden kann. Die Kraftübertragung ist besonders effektiv, da der schaufelartige Bereich des mindestens einen Rotorblatts weit von der Drehachse entfernt liegt, so dass hier auftreffende Fluidströmung eine größere Hebelwirkung hat. Auf der sich entgegen der Fluidströmung bewegenden Seite des Rotorblatts entsteht durch den eingeschlossenen Winkel von kleiner als 120°, beispielsweise 110° oder 100°, bevorzugt kleiner als 90°, beispielsweise 80°, eine besonders aerodynamische Form, wodurch der Strömungswiderstand auf dieser Seite verringert wird. So wird bei der Rückführung des Rotorblatts gegen die Fluidströmung weniger Kraft verbraucht. Besonders effizient ist diese Form des Rotorblatts, weil sie in einem Bereich fern der Drehachse angeordnet ist, da dort die höchste Drehgeschwindigkeit auftritt. Alternativ kann der zwischen der konvexen Seite des ersten Abschnitts und der konkaven Seite des zweiten Abschnitts eingeschlossene Winkel variabel ausgestaltet sein, beispielsweise indem beide Abschnitte beweglich aneinander angelenkt sind.

Vorteilhafterweise ist an der konvexen Seite des zweiten Abschnitts des Rotorblatts mindestens ein Fähnchenelement beweglich angeordnet. Das Fähnchenelement ist derart angeordnet, dass sein freies Ende von der konvexen Seite des zweiten Abschnitts des Rotorblatts absteht, wenn sich das Rotorblatt mit der Fluidströmung bewegt. Dadurch steht eine zusätzliche Fläche zur Aufnahme der Fluidströmung an der Vorderseite des Rotorblatts zur Verfügung. Wird das Rotorblatt gegen die Fluidströmung zurück geführt, liegt das Fähnchenelement dicht an der konvexen Seite des zweiten Abschnitts des Rotorblatts an und verringert dadurch den Strömungswiderstand des Rotorblatts bei der Rückführung. So kann der Wirkungsgrad zusätzlich erhöht werden.

Bevorzugt weist mindestens ein Rotorblatt mindestens eine erste Höhe in einem ersten Abstand parallel zur Drehachse und eine zweite Höhe in einem zweiten Abstand parallel zur Drehachse auf, wobei der erste Abstand und die erste Höhe kleiner sind als der zweite Abstand und die zweite Höhe. Dadurch ist ein Strömungswiderstand des Rotorblatts im drehachsenfernen Bereich größer als im Bereich nahe der Drehachse, im Folgenden auch als Innenseite des Rotorblatts bezeichnet, wodurch die Aufnahme der Fluidströmung durch das Rotorblatt im drehachsenfernen Bereich, im Folgenden auch als Außenseite des Rotorblatts bezeichnet, begünstigt und damit der Wirkungsgrad zusätzlich erhöht wird. Dies ist vor allem an der Vorderseite des Rotorblatts der Fall, die aufgrund des zuvor beschriebenen Aufbaus einen höheren Strömungswiderstand als die Rückseite des Rotorblatts hat. Dass die Fluidströmung hauptsächlich im drehachsenfernen Bereich aufgenommen wird, ist auch wegen der größeren Hebelwirkung in diesem Bereich besonders effektiv. Besonders bevorzugt weist jedes Rotorblatt mindestens eine erste und eine zweite Höhe wie oben beschrieben auf.

Es ist eine weitere Aufgabe der vorliegenden Erfindung, eine Fluidturbine mit einem Rotor anzugeben, die einen hohen Wirkungsgrad aufweist.

Bei einer Fluidturbine mit einem Rotor mit einem oder mehreren der zuvor beschriebenen Merkmale, wobei der Rotor in einem Gehäuse angeordnet ist, wobei eine Oberseite und eine Unterseite des Gehäuses im wesentlichen senkrecht zur Drehachse angeordnet sind, wird die Aufgabe dadurch gelöst, dass der Rotor relativ zum Gehäuse drehbar ist, wobei das Gehäuse mindestens einen ersten Abstand zwischen Ober- und Unterseite des Gehäuses in einem ersten Abstand parallel zur Drehachse und einen zweiten Abstand zwischen Ober- und Unterseite des Gehäuses in einem zweiten Abstand parallel zur Drehachse aufweist, wobei der erste Abstand parallel zur Drehachse und der erste Abstand zwischen Ober- und Unterseite des Gehäuses kleiner sind als der zweite Abstand parallel zur Drehachse und der zweite Abstand zwischen Ober- und Unterseite des Gehäuses.

Die Ober- und/oder Unterseite des Gehäuses kann eine beliebige, z. B. quadratische, runde, mehreckige oder vieleckige Form haben. Dadurch, dass der Abstand zwischen der Ober- und Unterseite des Gehäuses im Bereich der Drehachse geringer ist, als weiter entfernt von der Drehachse, entsteht der Venturi-Effekt, wodurch die Fluidströmung den Bereich nahe der Drehachse schneller in Richtung der Außenseite des Rotorblatts passiert. Die Fluidströmung übt aufgrund des Venturi-Effekts somit eine größere Druckkraft auf die Außenseite des Rotorblatts aus, die aufgrund der in Bezug auf die Fluidströmung unterschiedlichen Formung der Vorder- und Rückseite des Rotorblatts auf dessen Vorderseite stärker zum Tragen kommt als auf der aerodynamischeren Rückseite des Rotorblatts. Somit verbessert sich der Wirkungsgrad der Fluidturbine noch weiter.

Bevorzugt ist der Abstand zwischen der Oberseite des Gehäuses und den Rotorblättern und zwischen der Unterseite des Gehäuses und den Rotorblättern im Wesentlichen konstant. Dies ist am günstigsten für die Nutzung der Fluidströmung, da es keine Bereiche zwischen Rotorblatt und Ober- bzw. Unterseite des Gehäuses gibt, die die Fluidströmung beispielsweise schneller passiert als andere. Daher wird die Fluidströmung besonders gleichmäßig auf die Außenseite des Rotorblatts gelenkt.

Vorteilhafterweise ist entlang der Oberseite und der Unterseite des Gehäuses von der Drehachse radial nach außen jeweils mindestens ein Klappenelement angeordnet, dessen Höhe parallel zur Drehachse dem Abstand zwischen der Oberseite bzw. der Unterseite des Gehäuses und den Rotorblättern entspricht. Bevorzugt ist das Klappenelement um einen Aufhängepunkt um maximal 90°, beispielsweise zwischen 0° und 90° oder zwischen 0° und 70°, aus einer Position parallel zur Drehachse in eine abgeklappte Position schwenkbar. Das Klappenelement ist bevorzugt derart angeordnet, dass es sich in der Position parallel zur Drehachse befindet, wenn sich das direkt zwischen den Klappenelementen an der Ober- und Unterseite befindende Rotorblatt mit der Fluidströmung bewegt. Dadurch wird der Strömungswiderstand für das Rotorblatt erhöht. Bewegt sich das Rotorblatt zwischen den Klappenelementen gegen die Fluidströmung, befindet sie sich in der abgeklappten Position. Auf diese Weise wird der Strömungswiderstand für das Rotorblatt verringert. Alternativ zu einem schwenkbaren Klappenelement kann auch ein Klappenelement aus einem elastischen Material entlang der Oberseite und der Unterseite des Gehäuse angeordnet sein.

In bevorzugten Ausführungsformen ist an der Oberseite und/oder der Unterseite des Gehäuses mindestens ein Fluidschlitz angeordnet. Dieser ist derart angeordnet, dass Fluidströmung durch den Fluidschlitz auf die Vorderseite des Rotorblatts gelangen kann oder dass die Fluidströmung durch Passieren des Fluidschlitzes aufgrund des Bernoulli-Effekts einen Sog erzeugt, durch den das Fluid, z. B. Luft oder Wasser, aus dem Gehäuse aus dem Bereich der Rückseite des Rotorblatts gesaugt wird. Dadurch kann der Druck auf die Vorderseite des Rotorblatts erhöht bzw. der Strömungswiderstand bei der Rückführung des Rotorblatts verringert werden. Dies führt zu einer Verbesserung des Wirkungsgrads der Fluidturbine. Bevorzugt sind an der Oberseite und/oder an der Unterseite des Gehäuses mindestens zwei Fluidschlitze angeordnet. Der erste Fluidschlitz ist bevorzugt derart angeordnet, dass die Fluidströmung durch den ersten Fluidschlitz in das Gehäuse und auf die Vorderseite des Rotorblatts gelangt und auf dieses einen höheren Druck ausübt. Der zweite Fluidschlitz ist bevorzugt derart angeordnet, dass die Fluidströmung durch Passieren des Fluidschlitzes aufgrund des Bernoulli-Effekts einen Sog erzeugt, durch den das Fluid, z. B. Wasser oder Luft, aus dem Gehäuse aus dem Bereich der Rückseite des Rotorblatts gesaugt wird, wodurch der Strömungswiderstand bei der Rückführung des Rotorblatts verringert wird. Auf diese Weise kann der Wirkungsgrad der Fluidturbine noch weiter erhöht werden. In besonders bevorzugten Ausführungsformen sind mindestens zwei Fluidschlitze wie zuvor beschrieben an der Oberseite und an der Unterseite des Gehäuses angeordnet, wodurch sich der Wirkungsgrad der Fluidturbine verbessern kann.

In vorteilhaften Ausführungsformen umfasst das Gehäuse mindestens zwei Stützelemente, die zwischen der Ober- und Unterseite des Gehäuses angeordnet sind. Sie dienen hauptsächlich dazu, die Ober- und Unterseite abzustützen, so dass die Rotorblätter frei zwischen Ober- und Unterseite des Gehäuses rotieren können. Darüber hinaus können die Stützelemente auch derart geformt sein, dass sie die Fluidströmung lenken, so dass diese beispielsweise in einem günstigen Winkel und/oder mit einer veränderten Geschwindigkeit auf die Rotorblätter trifft. Die Stützelemente reichen höchstens bis an den Außendurchmesser des Drehkreises der Rotorblätter heran und kontaktieren diese nicht.

In weiteren Ausführungsformen kann bei dem Gehäuse außerdem eine Seitenwand vorgesehen sein, die sich abschnittsweise zwischen Ober- und Unterseite des Gehäuses erstreckt. Sie weist bevorzugt eine Fluideinlassöffnung und eine Fluidauslassöffnung auf und kann dazu dienen, die Rotorblätter vor ungünstigen Fluidströmungen abzuschirmen.

Die Fluidturbine kann in einer weiteren Ausführungsform ein Tragelement zur Befestigung des Gehäuses umfassen. Dieses kann beispielsweise ein Mast sein, oder ein niedrigeres Tragelement in ähnliche Größe wie das Gehäuse, um das Gehäuse in der Nähe des Bodens oder einer anderen Fläche, z. B. auf einem Dach, zu befestigen.

In bevorzugten Ausführungsformen ist ein Generator in das Gehäuse integriert. Der Generator kann z. B. im Bereich der Drehachse angeordnet sein.

Vorteilhafterweise ist das erste Gehäuse in einem quaderförmigen äußeren Gehäuse angeordnet, wobei das äußere Gehäuse an einem vertikalen Stützmast montierbar und relativ zum Stützmast drehbar ist, wobei die Drehachse des Rotors parallel zum Stützmast ist, wobei das äußere Gehäuse an einer parallel zur Drehachse verlaufenden ersten Quaderseite eine erste Öffnung als Fluideinlass und an einer der ersten Quaderseite gegenüberliegenden zweiten Quaderseite eine zweite Öffnung als Fluidauslass umfasst. Das Gehäuse kann sich im Fluid ohne Hilfe von Motoren wie eine Windfahne an der Richtung der Fluidströmung ausrichten, so dass das Fluid in den Fluideinlass gelangt. Durch das äußere Gehäuse gelangt die Fluidströmung in einem definierteren Bereich auf die Rotorblätter, so dass sie effektiver genutzt werden kann. Dies wirkt sich positiv auf den Wirkungsgrad der Fluidturbine aus.

Bevorzugt umfasst das äußere Gehäuse an mindestens einer parallel zur Drehachse des Rotors verlaufenden Kante der zweiten Quaderseite ein Flaggenelement. Dieses erleichtert die optimale Ausrichtung des äußeren Gehäuses in der Fluidströmung ohne Motorkraft.

In vorteilhaften Ausführungsformen ist im Fluideinlass ein Ablenkelement angeordnet. Das Ablenkelement ist bevorzugt so angeordnet, dass es die Fluidströmung von dem sich entgegen der Fluidströmung bewegenden Rotorblatt ablenkt. Dadurch gelangt ein größerer Teil der Fluidströmung auf die Vorderseite des Rotorblatts, das sich in Richtung der Fluidströmung bewegt. Außerdem ist der Strömungswiderstand für das sich entgegen der Fluidströmung bewegende Rotorblatt geringer, da dieses der Fluidströmung größtenteils nicht ausgesetzt ist. Dies führt also zu einer weiteren Verbesserung des Wirkungsgrads.

In bevorzugten Ausführungsformen umfasst das erste Gehäuse parallel zur Drehachse einen mit der Ober- und Unterseite des Gehäuses verbundenen Flächenabschnitt, der entsprechend dem Drehkreis der Rotorblätter gebogen und im äußeren Gehäuse diagonal zum Ablenkelement angeordnet ist. Auf diese Weise wird ein Bereich, in dem das Rotorblatt die Fluidströmung aufnehmen kann, vergrößert. Außerdem kann der Venturi-Effekt, der durch die Verringerung des Abstandes zwischen der Ober- und Unterseite des ersten Gehäuses entsteht, vergrößert werden. Dadurch kann der Wirkungsgrad weiter erhöht werden.

Vorteilhafterweise umfasst das äußere Gehäuse an mindestens einer parallel zur Drehachse des Rotors verlaufenden Seitenwand mindestens eine Fluidöffnung. Fluidströmung, die an der Außenseite des äußeren Gehäuses an dieser Fluidöffnung vorbei strömt, erzeugt den Bernoulli-Effekt, so dass das Fluid, das sich im Inneren des äußeren Gehäuses befindet, durch die Fluidöffnung herausgesaugt wird. Dadurch verringert sich der Strömungswiderstand, gegen den sich das entgegen der Richtung der Fluidströmung bewegende Rotorblatt bewegen muss, wodurch der Wirkungsgrad verbessert werden kann. Bevorzugt ist jeweils mindestens eine Fluidöffnung an einander gegenüberliegenden, parallel zur Drehachse des Rotors verlaufenden Seitenwänden angeordnet.

Bevorzugt ist an einer der Seitenwände mindestens ein die Fluidöffnung überdeckendes Fluidabweiselement und/oder Fluidansaugelement angeordnet, das in Richtung der ersten Quaderseite bzw. der zweiten Quaderseite einen stumpfen Winkel aufweist. Ist an der Seitenwand, entlang der sich das Rotorblatt entgegen der Richtung der Fluidströmung bewegt, ein Fluidabweiselement angeordnet, wird der Bernoulli-Effekt verstärkt, während ein Fluidansaugelement einen zusätzlichen Eintrag an Fluidströmung auf das Rotorblatt bewirken kann. Das Fluidansaugelement ist dazu an der Seitenwand angeordnet, entlang der sich das Rotorblatt in Richtung der Fluidströmung bewegt. Die Anordnung von mindestens einem Fluidabweiselement und/oder mindestens einem Fluidansaugelement kann zu einer zusätzlichen Erhöhung des Wirkungsgrads der Fluidturbine führen.

Die vorliegende Erfindung soll unter Bezugnahme auf ein bevorzugtes Ausführungsbeispiel näher erläutert werden. Dazu zeigen schematisch
- Figur 1: einen Rotor gemäß einem Beispiel der vorliegenden Erfindung in einer Draufsicht;
- Figur 2: eine Wasserturbine gemäß einem ersten Beispiel der vorliegenden Erfindung in einer Schnittdarstellung entlang der Linie II-II aus Figur 1;
- Figur 3: eine Wasserturbine gemäß einem zweiten Beispiel in einer Draufsicht;
- Figur 4: eine Wasserturbine gemäß einem dritten Beispiel in einer Draufsicht;
- Figur 5: eine Wasserturbine gemäß einem vierten Beispiel in einer Draufsicht;
- Figur 5A: eine Detailansicht eines Fluidschlitzes aus Figur 5;
- Figur 6: eine Wasserturbine gemäß dem vierten Beispiel in einer Schnittdarstellung entlang der Linie VI-VI aus Figur 5;
- Figur 7: eine Wasserturbine gemäß dem vierten Beispiel in einer Schnittdarstellung entlang der Linie VII-VII aus Figur 5;
- Figur 8: eine Wasserturbine mit einem äußeren Gehäuse gemäß einem fünften Beispiel der vorliegenden Erfindung in einer dreidimensionalen, ersten Ansicht;
- Figur 9: eine Wasserturbine gemäß dem fünften Beispiel in einer dreidimensionalen, zweiten Ansicht; und
- Figur 10: eine Wasserturbine mit einem äußeren Gehäuse gemäß einem sechsten Beispiel der vorliegenden Erfindung in einer dreidimensionalen Ansicht.

Die Erfindung soll beispielhaft anhand von Ausführungen erläutert werden, die als Wasserturbine bzw. Rotor für eine Wasserturbine ausgebildet sind. Die folgenden Erläuterungen gelten ebenso für Rotoren und Turbinen für beliebige andere Fluide, insbesondere Luft.

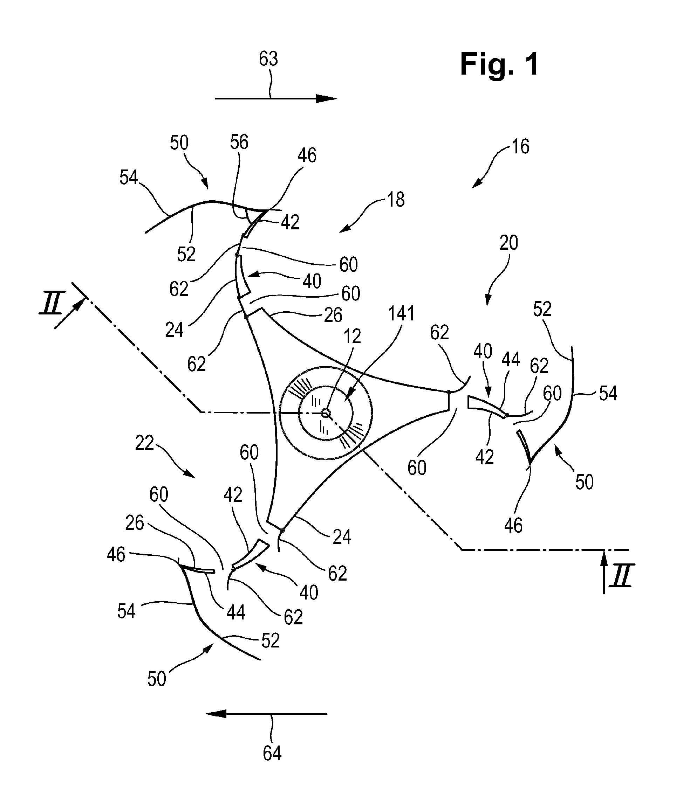

In Figur 1 ist ein Rotor 16 gemäß einem Beispiel der vorliegenden Erfindung in einer Draufsicht dargestellt. In diesem Beispiel umfasst der Rotor 16 eine vertikale Drehachse 12, die in dieser Darstellung in die Zeichenebene hinein geht, und drei Rotorblätter 18, 20, 22, die an der Drehachse 12 angeordnet sind. Alternativ können auch zwei, vier, fünf oder mehr Rotorblätter anstelle der drei Rotorblätter 18, 20, 22 an der Drehachse 12 angeordnet sein. Jedes Rotorblatt 18, 20, 22 umfasst im hier dargestellten Beispiel jeweils zwei Öffnungen 60 mit einem öffenbaren Schließelement 62. Das Schließelement 62 ist jeweils so angeordnet, dass es die Öffnung 60 verschließt, wenn sich das Rotorblatt 18, 20, 22 in eine erste Richtung 63 bewegt, die der Richtung der Wasserströmung entspricht, und dass es die Öffnung 60 freigibt, wenn sich das Rotorblatt 18, 20, 22 in eine zweite Richtung 64 bewegt, die der Richtung entgegen der Wasserströmung entspricht. Die Drehung des Rotors 16 erfolgt im hier dargestellten Beispiel mit dem Uhrzeigersinn und entspricht bei der hier gezeigten Anordnung der Rotorblätter 18, 20, 22 der Vorzugsdrehrichtung des Rotors 16. Im in Figur 1 dargestellten Beispiel sind an jedem Rotorblatt 18, 20, 22 jeweils zwei Öffnungen 60 mit Schließelement 62 angeordnet. Es können alternativ auch eine, drei, vier oder mehr Öffnungen 60 mit jeweiligem Schließelement 62 an einem oder mehreren Rotorblättern 18, 20, 22 vorgesehen sein. Das Schließelement 62 ist im hier gezeigten Ausführungsbeispiel als Klappe ausgebildet und aus einem flexiblen Material, das sich biegen lässt und bevorzugt elastisch ist. Die Klappe kann aber auch aus einem starren Material angefertigt sein. Die Klappe ist im in Figur 1 dargestellten Beispiel mit einem Ende an der der Drehachse 12 jeweils näheren Seite der Öffnung 60 drehbar aufgehängt, wobei das andere Ende der Klappe radial nach außen zeigt. Verschließt die Klappe die Öffnung 60, liegt das radial nach außen zeigende Ende der Klappe beispielsweise auf dem Rotorblatt 18, 20, 22 neben der Öffnung 60 auf. Die in diesem Ausführungsbeispiel gezeigte Klappe ist bevorzugt an der Vorderseite 24 des Rotorblatts 18, 20, 22 angeordnet, so dass sie gegen das Rotorblatt 18, 20, 22 gedrückt wird und dadurch die Öffnung 60 verschließt, wenn sich das Rotorblatt 18, 20, 22 in Richtung der Wasserströmung bewegt. Wird das Rotorblatt 18, 20, 22 in die zweite Richtung 64 gegen die Wasserströmung bewegt, gibt die Klappe die Öffnung automatisch frei, da die Wasserströmung, die von der Rückseite 26 des Rotorblatts 18, 20, 22 durch die Öffnungen 62 dringt, gegen die Klappe drückt, so dass diese aufschwingt. Auf diese Weise wird der Strömungswiderstand der Rückseite 26 des Rotorblatts 18, 20, 22 verringert.

Im hier dargestellten Beispiel umfasst jedes Rotorblatt 18, 20, 22 außerdem einen gekrümmten ersten Abschnitt 40, der eine konkave Seite 42 und eine konvexe Seite 44 aufweist. An dem der Drehachse 12 abgewandten Ende 46 des ersten Abschnitts 40 ist ein gekrümmter zweiter Abschnitt 50 angeordnet, der eine konkave Seite 52 und eine konvexe Seite 54 aufweist. Der erste und zweite Abschnitt 40, 50 sind derart angeordnet, dass in radialer Richtung auf die konvexe Seite 44 des ersten Abschnitts 40 die konkave Seite 52 des zweiten Abschnitts 50 folgt. Der zweite Abschnitt 50 ist bevorzugt direkt, das heißt ohne Luftspalt oder ähnliches, an den ersten Abschnitt 40 angeformt. Zwischen der konvexen Seite 44 des ersten Abschnitts und der konkaven Seite des zweiten Abschnitts 50 ist ein Winkel 56 eingeschlossen, der im hier dargestellten Beispiel kleiner als 90° ist. Der eingeschlossene Winkel 56 kann in alternativen Ausführungsformen auch zwischen 90° und 120° liegen, beispielsweise 95°, 100°, 105°, 110° oder 115° oder ein Winkel dazwischen sein. In weiteren alternativen Ausführungsformen kann der eingeschlossene Winkel 56 auch variabel sein, beispielsweise indem der erste und zweite Abschnitt 40, 50 beweglich aneinander angelenkt sind, insbesondere derart dass der Winkel 56 zeitweise auf Winkel deutlich kleiner 90° bis zu 0° reduziert wird. Dadurch kann der Widerstand gegen die Fluidströmung beim Bewegen des jeweiligen Rotorblatts 18, 20, 22 gegen die Strömungsrichtung weiter minimiert werden. Durch die Anordnung des zweiten Abschnitts 50 an den ersten Abschnitt 40 wird an der Vorderseite 24 des Rotorblatts 18, 20, 22 eine Art Schaufel für die Fluidströmung gebildet. Hier und in den folgenden Beispielen wird von einer Wasserströmung als Fluidströmung ausgegangen. Die Rotorblätter können jedoch mit einer Strömung aus jedem beliebigen Fluid, bevorzugt mit Wasser oder Luft angetrieben werden. Da die Schaufel im drehachsenfernen Bereich ausgebildet ist, kann die dort auftreffende Wasserströmung besonders effektiv genutzt werden, weil sie eine größere Hebelwirkung besitzt. An der Rückseite 26 des Rotorblatts 18, 20, 22 wird an dem Ende 46 des ersten Abschnitt 40 eine Spitze gebildet, die einen günstigen Strömungswiderstandskoeffizienten aufweist. Bei der Ausführung mit beweglicher Anlenkung der Abschnitte 40, 50 und variablem Winkel 56 kann der Drehpunkt zwischen den beiden Abschnitten 40, 50 am Ende 46 angeordnet sein. Insbesondere für Anwendungen in Fluiden mit höherer Dichte wie etwa Wasser kann das Ende 46 anstatt als Spitze als Wulst ausgebildet sein. Die Spitze bzw. die Wulst bildet eine vorstehende Kante, die in die Vorzugsdrehrichtung des Rotors 16 weist.

Die mindestens eine Öffnung 60 mit Schließelement 62 ist bevorzugt, wie auch in Figur 1 gezeigt wird, im ersten Abschnitt 40 des Rotorblatts 18, 20, 22 angeordnet.

Das oder die Rotorblätter 18, 20, 22 sind bevorzugt durchgehend, das heißt an einem Stück, ausgebildet. Dies hat den Vorteil, dass die Rotorblätter 18, 20, 22 nicht auf ober- und/oder unterseitige Stützkonstruktionen angewiesen sind. Im Bereich der Drehachse 12 des Rotors 16 können in bevorzugten Ausführungsformen Ausnehmungen in dem oder jedem Rotorblatt 18, 20, 22 vorgesehen sein, durch die die Wasserströmung hindurchströmen und sich somit nicht zu stark aufstauen kann.

In alternativen Ausführungsformen muss nicht jedes Rotorblatt 18, 20, 22 einen ersten und zweiten Abschnitt 40, 50 wie oben beschrieben aufweisen, sondern es kann auch nur eins oder zwei von drei Rotorblättern oder eine beliebige Anzahl von Rotorblättern bei einem Rotor mit mehr als drei Rotorblättern einen derartigen ersten und zweiten Abschnitt 40, 50 aufweisen. Das oder jedes Rotorblatt kann in alternativen Ausführungsformen auch eine andere als die in Figur 1 gezeigte aufweisen, beispielsweise eine einfache gerade oder geschwungene Form.

Im Bereich der Drehachse 12 weist der Rotor 16 Nabeneinsenkungungen 141, 142 auf, wobei in der Draufsicht in Figur 1 nur die obere Nabeneinsenkung 141 darstellbar ist. Die Nabeneinsenkungen 141, 142 werden in den folgenden Figuren näher erläutert.

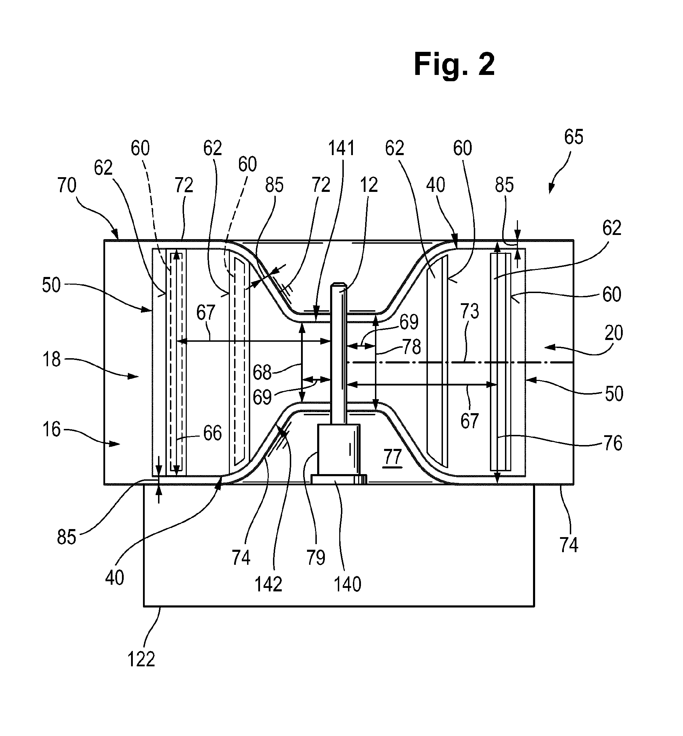

In Figur 2 ist eine Wasserturbine 65 als Beispiel für eine Fluidturbine gemäß einem ersten Beispiel der vorliegenden Erfindung in einer Seitenansicht gezeigt. Die Wasserturbine 65 umfasst ein Gehäuse 70, in dem der Rotor 16 relativ zum Gehäuse 70 drehbar angeordnet ist. Die in Figur 2 gezeigte Darstellung umfasst zwei Rotorblätter 18, 20, die jeweils eine erste Höhe 68 in einem ersten Abstand 69 parallel zur Drehachse 12 und eine zweite Höhe 66 in einem zweiten Abstand 67 parallel zur Drehachse 12 aufweisen. Der erste Abstand 69 und die erste Höhe 68 sind dabei kleiner als der zweite Abstand 67 und die zweite Höhe 66, so dass sich die Rotorblätter 18, 20 zur Drehachse 12 hin verjüngen. Dadurch entstehen eine obere und eine untere Nabeneinsenkung 141, 142 des Rotors 16. In alternativen Ausführungsformen kann statt einer kontinuierlichen Verjüngung beispielsweise auch eine Stufe vorgesehen sein. Die Verjüngung der Rotorblätter 18, 20 zur Drehachse 12 hin erfolgt bevorzugt nicht linear, sondern die zweite Höhe 66 ist in einem definierten Bereich konstant und fällt dann in Form einer Kurve auf die erste Höhe 68 ab. Bevorzugt ist die Verjüngung, wie hier dargestellt, symmetrisch zu einer Längsachse 73 des Rotorblatts 18, 20 senkrecht zur Drehachse 12. Die hier dargestellte Verjüngung der Rotorblätter 18, 20 betrifft bevorzugt den ersten Abschnitt 40 der Rotorblätter 18, 20. Der zweite Abschnitt 50 hat am Übergang zum ersten Abschnitt 40 bevorzugt die gleiche Höhe wie der erste Abschnitt 40 in diesem Bereich. In Richtung des dem ersten Abschnitt 40 abgewandten Endes des zweiten Abschnitts 50 kann sich die Höhe des zweiten Abschnitts 50 verringern oder konstant bleiben.

Die Schließelemente 62 sind in diesem Ausführungsbeispiel im Bereich des ersten Abschnitts 40 mit der zweiten Höhe 66 und im Bereich, in dem die Verjüngung des ersten Abschnitts 40 auf die erste Höhe 68 beginnt. Die Schließelemente 62 am hier links dargestellten Rotorblatt 18 sind geschlossen dargestellt, welches einer Stellung entspricht, die die Schließelemente 62 einnehmen, wenn die Richtung der Wasserströmung in die erste Richtung 63 (Figur 1) weist und sich auch das Rotorblatt 18 in die erste Richtung 63 bewegt. Daher sind die Öffnungen 60, die durch die Schließelemente 62 verdeckt werden, mit gestrichelten Linien dargestellt. Die Schließelemente 62 am hier rechts dargestellten Rotorblatt 20 sind geöffnet, da sich das Rotorblatt 20 in die zweite Richtung 64 (Figur 1) entgegen der Wasserströmung bewegt. Durch die Öffnung 60 sieht man einen Teil des geöffneten Schließelements 62, welches sich, wie auch in Fig. 1 gezeigt, in die Zeichenebene hinein biegt.

Das Gehäuse 70 umfasst eine Oberseite 72 und eine Unterseite 74, die im Wesentlichen senkrecht zur Drehachse 12 angeordnet sind. Das Gehäuse 70 weist einen ersten Abstand 78 einen ersten Abstand 78 zwischen Ober- und Unterseite 72, 74 des Gehäuses 70 im ersten Abstand 69 parallel zur Drehachse 12 und einen zweiten Abstand 76 zwischen Ober- und Unterseite 72, 74 des Gehäuses 70 im zweiten Abstand 67 parallel zur Drehachse 12 auf. Dabei ist der erste Abstand 69 parallel zur Drehachse 12 und der erste Abstand 78 zwischen Ober- und Unterseite 72, 74 des Gehäuses 70 kleiner als der zweite Abstand 67 parallel zur Drehachse 12 und der zweite Abstand 76 zwischen Ober- und Unterseite 72, 74 des Gehäuses 70. Der Abstand 85 zwischen der Oberseite 72 des Gehäuses 70 und den Rotorblättern 18, 20, 22 und zwischen der Unterseite 74 des Gehäuses 70 und den Rotorblättern 18, 20, 22 ist bevorzugt im Wesentlichen konstant. Das Gehäuse 70 ist somit an die Nabeneinsenkungen 141, 142 des Rotors 16 angepasst. Durch die Verjüngung des Gehäuses 70 wird der Venturi-Effekt erzeugt, durch den die Wasserströmung auf die Außenseiten der Rotorblätter 18, 20 gelenkt wird, um so den Wirkungsgrad der Wasserturbine zu erhöhen, da die Außenseiten der Rotorblätter 18, 20 eine höhere Hebelwirkung aufweisen.

Die Unterseite 74 des Gehäuses 70 ist an einem Tragelement 122 befestigt, das die Wasserturbine 65 trägt, wenn diese beispielsweise am Boden eines Gewässers oder Strömungskanals aufgestellt wird. Das Tragelement 122 ist bevorzugt als ein massiver Quader ausgebildet, der eine Fläche hat, deren Größe etwas kleiner als die Unterseite 74 des Gehäuses 70 ist, wie in Figur 2 gezeigt, aber alternativ auch gleich groß oder größer als die Unterseite 74 des Gehäuses 70 sein. Es kann sich bei dem Trageelement 122 alternativ auch um einen Mast handeln, an dem das Gehäuse 70 befestigt wird. In einem Hohlraum 77 zwischen der Unterseite 74 des Gehäuses 70 und dem Tragelement 122 ist im in Figur 2 dargestellten Beispiel ein Generator 79 angeordnet, der mit einem Generatorflansch 140 drehfest auf dem Tragelement 122 angeordnet ist und die Rotation des Rotors 16 in elektrische Energie umwandelt. Alternativ kann der Generator 79 auch oberhalb des Gehäuses 70 an dessen Oberseite 72 oberhalb der oberen Nabeneinsenkung 141 angeordnet sein. Der Generator 79 kann dort besser vor der Wasserströmung geschützt werden. Der Bereich oberhalb der oberen Nabeneinsenkung 141 und/oder der Bereich unterhalb der unteren Nabeneinsenkung 142, in dem der Generator 79 in diesem Beispiel angeordnet ist, kann auch abgedeckt werden, beispielsweise durch eine Platte, wodurch der Generator 79 insgesamt vor dem umgebenden Wasser oder Witterungen, wie z. B. Regen, geschützt werden kann.

Die in Figur 2 gezeigte Wasserturbine eignet sich außer für Wasser auch für den Betrieb mit jeder anderen Fluidströmung, beispielsweise mit Luft.

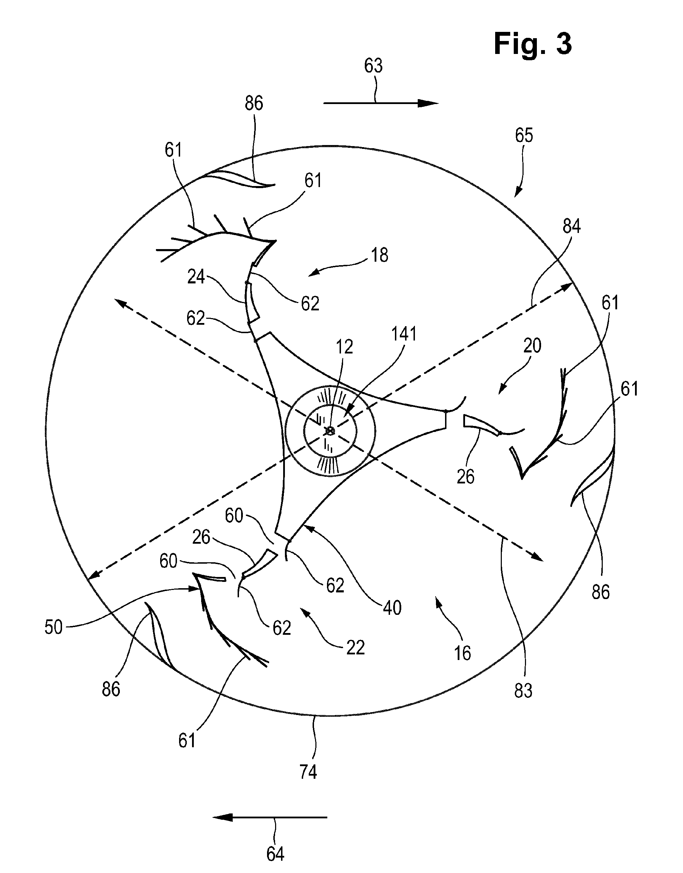

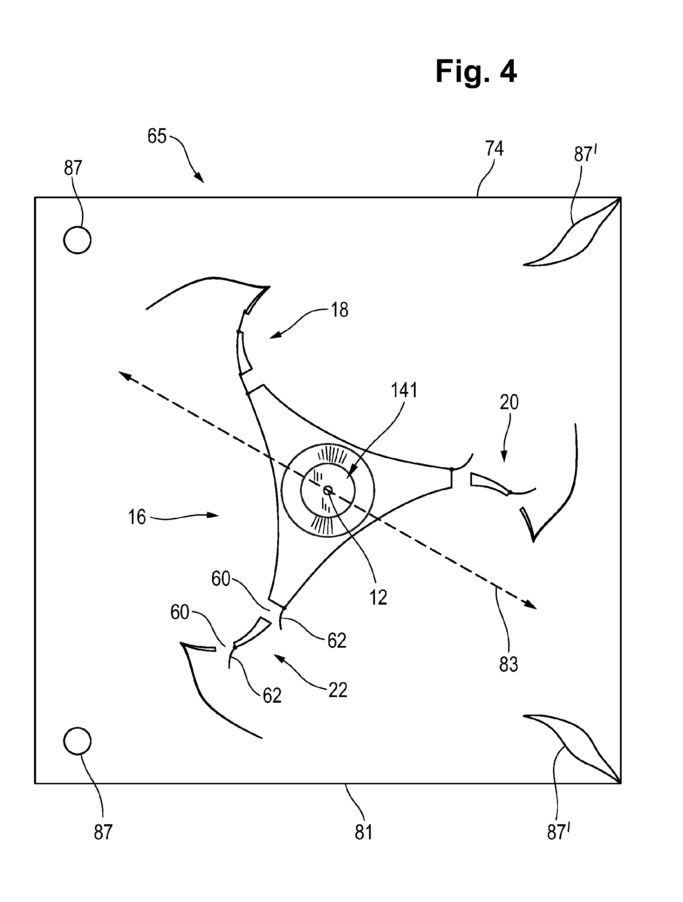

In den Figuren 3 und 4 sind Wasserturbinen 65 mit einem Gehäuse 70 gemäß einem zweiten bzw. dritten Ausführungsbeispiel der vorliegenden Erfindung in einer Draufsicht gezeigt.

In Figur 3 umfasst das Gehäuse 70 eine im Außenradius kreisförmige Ober- und Unterseite 72, 74. Zur besseren Darstellung fehlt jedoch in Figur 3 die Oberseite 72, so dass der darunterliegende Rotor 16 sichtbar ist. Der Durchmesser 84 der Ober- und Unterseite 72, 74 ist bevorzugt größer als der Durchmesser 83 des Drehkreises der Rotorblätter 18. Zwischen der in Figur 3 dargestellten Ober- und Unterseite 72, 74 des Gehäuses 70 sind in einem Bereich außerhalb des Drehkreises der Rotorblätter 18, 20, 22 bevorzugt Stützelemente 86 für die Ober- und Unterseite 72, 74 angeordnet, die durchgehend von der Oberseite 72 zur Unterseite 74 ausgebildet sind. Sie dienen hauptsächlich dazu, die Ober- und Unterseite 72, 74 abzustützen, so dass die Rotorblätter 18, 20, 22 frei zwischen Ober- und Unterseite 72, 74 des Gehäuses 70 rotieren können. Die Stützelemente 86 sind in diesem Ausführungsbeispiel geschwungen geformt, so dass sie die Fluidströmung lenken, damit diese beispielsweise in einem günstigen Winkel und/oder mit einer veränderten Geschwindigkeit auf die Rotorblätter 18, 20, 22 trifft, und/oder damit die Fluidströmung, die auf die Rotorblätter 18, 20, 22 trifft, nicht negativ, z. B. durch ungünstige Verwirbelungen, beeinflusst. Es können auch mehr als die drei gezeigten Stützelemente 86, z. B. vier, fünf, sechs oder sieben, oder auch nur zwei Stützelemente 86 zwischen der Ober- und Unterseite 72, 74 in gleichmäßigen oder beliebigen Abständen zueinander angeordnet sein. Die Stützelemente 86 reichen höchstens bis an den Drehkreis der Rotorblätter 18, 20, 22 heran und kontaktieren diese nicht. Der Rotor 16 entspricht im Wesentlichen dem in Figur 1 dargestellten Rotor mit jeweils zwei Öffnungen 60 mit öffenbarem Schließelement 62 an jedem Rotorblatt 18, 20, 22, jedoch sind in Figur 3 zusätzlich an der konvexen Seite 54 des zweiten Abschnitts 50 des Rotorblatts 18, 20, 22 jeweils fünf Fähnchenelemente 61 beweglich angeordnet. Die Anzahl der Fähnchenelemente ist beliebig, daher können in alternativen Ausführungsformen auch ein, zwei, drei, vier, sechs oder mehr Fähnchenelemente vorgesehen sein. Die Fähnchenelemente 61 stellen sich von der konvexen Seite 54 des Rotorblatts 18, 20, 22 ab, wenn sich dieses in Richtung der Wasserströmung, in diesem Fall in die erste Richtung 63, bewegt, da das Wasser unter das Fähnchenelement 61 greift. Auf diese Weise wird die Fläche des Rotorblatts 18, 20, 22, die von der Wasserströmung in die erste Richtung 63 getroffen wird, vergrößert, die Wasserströmung kann also besser aufgenommen werden. Dies ist im drehachsenfernen Bereich besonders effektiv, da hier eine größere Hebelwirkung vorliegt. Dagegen liegen die Fähnchenelemente 61 dicht an der konvexen Seite 54 des zweiten Abschnitts 50 des Rotorblatts 18, 20, 22 an, wenn sich dieses in die zweite Richtung 64 gegen die Wasserströmung bewegt. Der Strömungswiderstand der Rückseite 26 des Rotorblatts 18, 20, 22 wird somit durch die Fähnchenelemente 61 nicht wesentlich vergrößert.

Die in Figur 3 dargestellte Wasserturbine 65 kann anstelle von Wasser auch mit anderen Fluiden, bevorzugt z. B. mit Luft betrieben werden.

In Figur 4 sind die Ober- und Unterseite 72, 74 des Gehäuses 70 an den Außenkanten 81 quadratisch ausgebildet, wobei auch hier die Oberseite 72 zur besseren Darstellung nicht dargestellt ist. Der Rotor 16 entspricht dem in Figur 1 gezeigten Rotor, bei dem jedes Rotorblatt 18, 20, 22 zwei Öffnungen 60, die mit einem öffenbaren Schließelement 62 verschließbar sind, aufweist. Die Ober- und Unterseite 72, 74 des Gehäuses 70 ragen an allen Seiten über den Durchmesser 83 des Drehkreises der Rotorblätter 18, 20, 22 hinaus. An den vier Ecken der Ober- und Unterseite sind Stützelemente 87, 87' zwischen der Ober- und Unterseite 72, 74 angeordnet. Die von der Oberseite 72 zur Unterseite 74 durchgehenden Stützelemente 87 können als Stangen, beispielsweise mit rundem Querschnitt, wie die hier auf der linken Seite dargestellten Stützelemente 87, ausgebildet sein, oder einen geschwungenen Querschnitt, wie die hier als alternative Ausführungsform auf der rechten Seite dargestellten Stützelemente 87', aufweisen, aber auch andere Formen, z. B. rechteckige oder keilförmige Querschnitte aufweisen und dadurch Einfluss auf die Richtung der Wasserströmung nehmen. Die Anzahl der Stützelemente 87, 87' kann von der gezeigten abweichen, insbesondere größer sein, als in Fig. 4 gezeigt. So können beispielsweise zwei, fünf, sechs, sieben oder mehr Stützelemente 87, 87' vorgesehen sein. Ansonsten dienen die Stützelemente 87, 87' der Abstützung der Ober- und Unterseite 72, 74 des Gehäuses 70, so dass die Rotorblätter 18, 20, 22 frei zwischen Ober- und Unterseite 72, 74 rotieren können.

In weiteren, hier nicht dargestellten, alternativen Ausführungsformen können die Oberseite und Unterseite des Gehäuses auch dreieckig sein oder mehr als vier Ecken aufweisen, es kann auch die Oberseite eine andere Form als die Unterseite aufweisen. Auch die in Figur 4 gezeigte Wasserturbine 65 kann alternativ mit einem anderen Fluid, beispielsweise mit Luft, betrieben werden.

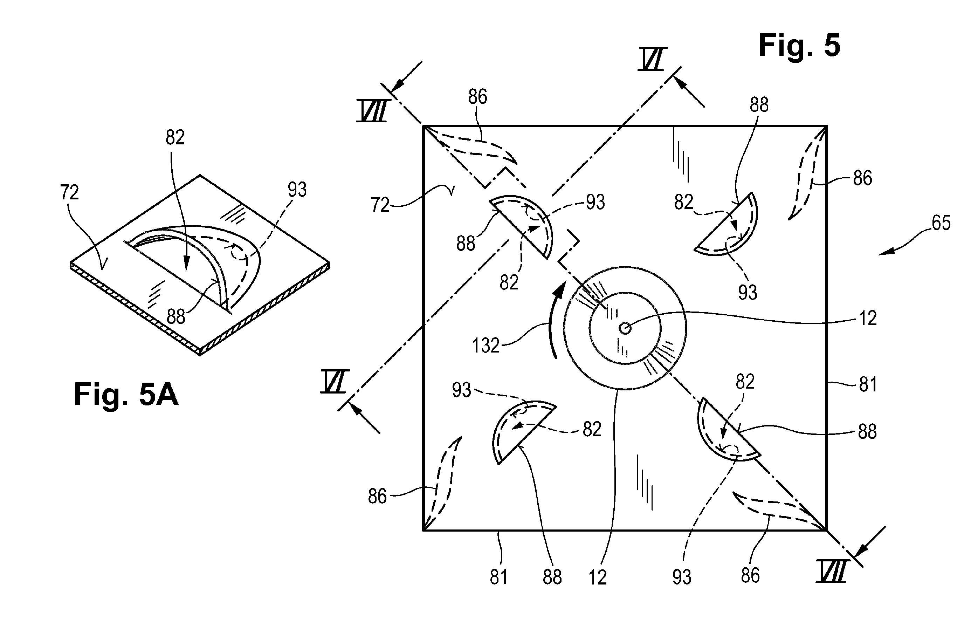

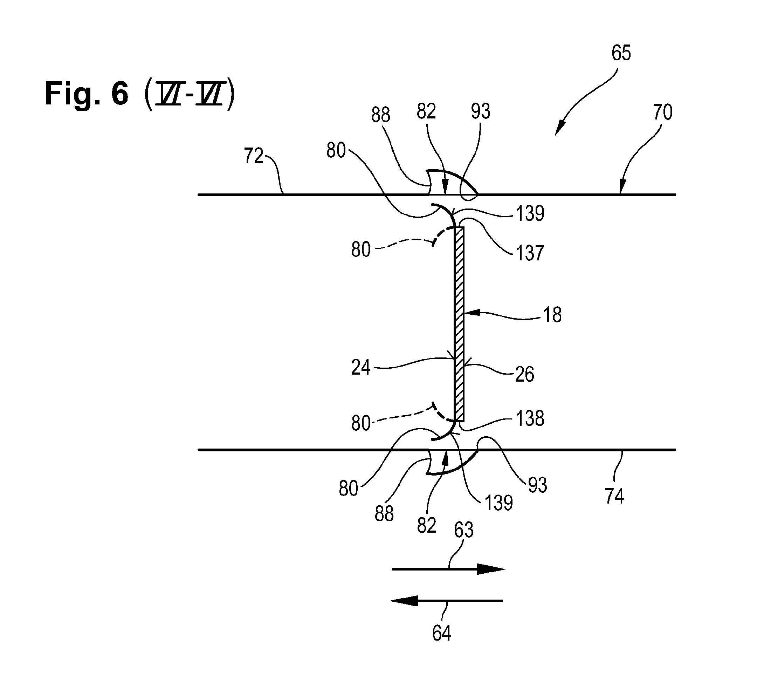

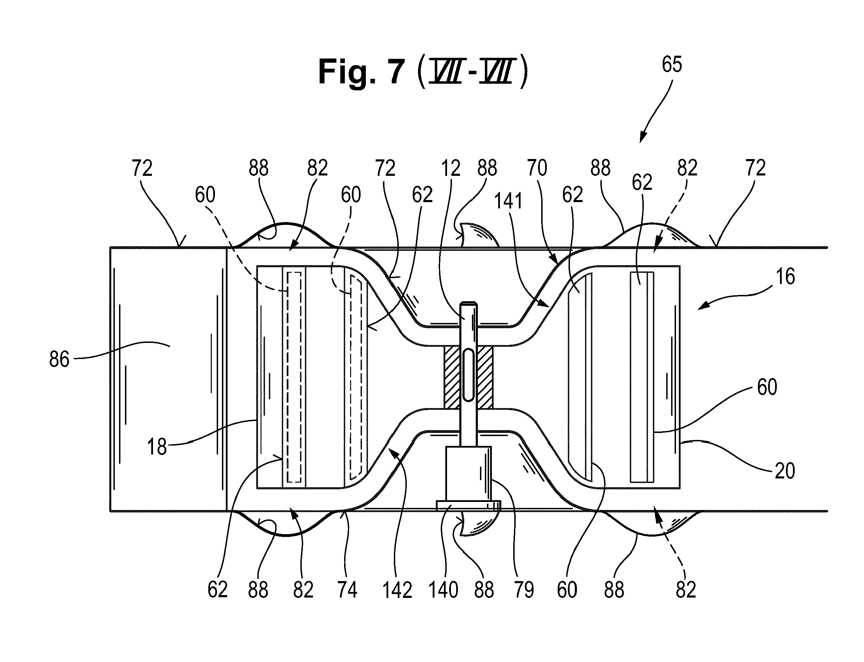

Figur 5 zeigt eine Wasserturbine 65 gemäß einem vierten Beispiel in einer Draufsicht. Die Ober- und Unterseite 72, 74 sind in diesem Beispiel an den Außenkanten 81 quadratisch, wobei hier weder die Unterseite 74 noch die Rotorblätter dargestellt sind, so dass man die Oberseite 72 sieht. An der Oberseite 72 sind in diesem Ausführungsbeispiel vier Fluidschlitze 82 angeordnet. Statt der vier Fluidschlitze 82 an der Oberseite 72 können in weiteren bevorzugten Ausführungsformen auch nur eins, zwei, drei, aber auch fünf, sechs oder mehr Fluidschlitze 82 an der Oberseite 72 angeordnet sein. Genauso kann ein oder mehrere Fluidschlitze 82 auch an der Unterseite 74 des Gehäuses 70 angeordnet sein, wie auch in den Figuren 6 und 7 gezeigt wird. Die Öffnung der Fluidschlitze 82 entsteht durch ein Abdeckelement 88, welches beispielsweise durch eine Ausbuchtung der Oberseite 72 oberhalb des Fluidschlitzes 82 gebildet wird. Die oder jede Öffnung kann auch durch Entfernen eines Teils der Oberseite 72, wodurch ein Fluidschlitz 82 entsteht, und Anformen eines entsprechenden, separaten Abdeckelements gebildet werden, wodurch sich die Richtung der Öffnung ergibt. Die Richtung der Öffnung der Fluidschlitze 82 richtet sich bevorzugt nach der Drehrichtung 132 des Rotors, von dem in dieser Darstellung nur die Drehachse 12 sichtbar ist. Die Öffnung der Fluidschlitze 82 korrespondiert mit der Drehrichtung 132 des Rotors, das heißt, die Rotorblätter 18, 20, 22 passieren unterhalb des jeweiligen Fluidschlitzes 82 der Oberseite 72 bzw. oberhalb des jeweiligen Fluidschlitzes 82 der Unterseite 74 (Figur 6) jeweils zuerst den Bereich der Öffnung und dann ein hinteres Ende 93 des Fluidschlitzes 82. Die Drehrichtung 132 entspricht dabei der Vorzugsdrehrichtung des Rotors. Figur 5A zeigt eine Detailansicht eines Fluidschlitzes 82 auf der Oberseite 72 des Gehäuses 70. Die Fluidschlitze 82 sind in Verbindung mit den Figuren 6 und 7 genauer beschrieben.

In Figur 6 ist die Wasserturbine 65 gemäß dem vierten Beispiel in einer Schnittdarstellung entlang der Linie VI-VI aus Figur 5 dargestellt. Dabei wird ein Stützelement 86 (Figur 5), das sich perspektivisch hinter dem Rotorblatt 18 befindet, wegen der besseren Übersichtlichkeit nicht dargestellt. An einer Oberkante 137 und an einer Unterkante 138 des hier dargestellten Rotorblatts 18 ist jeweils ein Flügelelement 80 beweglich angeordnet. Die Flügelelemente 80 sind durch die Wasserströmung einerseits in Richtung der Ober- bzw. Unterseite 72, 74 des Gehäuses 70 hochklappbar, wenn die Wasserströmung auf die Vorderseite 24 des Rotorblatts 18 trifft und dieses in die erste Richtung 63 bewegt. Dadurch vergrößert sich die Fläche des Rotorblatts 18, auf das die Wasserströmung trifft, so dass diese von dem Rotorblatt 18 noch besser aufgenommen werden kann. Die Flügelelemente 80 können aus starrem oder flexiblem, insbesondere elastischem Material ausgebildet sein und alternativ zu der in Figur 6 dargestellten, einfach gebogenen Form auch teilweise gerade, gerade oder mehrfach gebogen sein. Sie sind insgesamt derart ausgeformt und beweglich angeordnet, dass in der hochgeklappten Stellung ein Luftspalt, beispielsweise in der Größenordnung von einigen Millimetern, verbleibt, so dass die Wasserströmung zirkulieren kann und sich kein schädlicher Wasserstau bildet. Das heißt, die Höhe des hochgeklappten Flügelelements 80 entspricht etwas weniger als dem Abstand 85 (Figur 2) zwischen der Oberseite 72 bzw. der Unterseite 74 des Gehäuses 70 und dem hier dargestellten Rotorblatt 18. Das Flügelelement 80 kann bevorzugt nicht über die Ober- bzw. Unterkante 137, 138 des Rotorblatts 18 hinaus in Richtung der Rückseite 26 des Rotorblatts 18 geklappt werden.

Andererseits sind die Flügelelemente 80 einklappbar, wenn die Wasserströmung auf die Rückseite 26 des Rotorblatts 18, und somit auf die Rückseite 139 des Flügelelements 80, trifft, wenn sich das Rotorblatt 18 in die zweite Richtung 64 entgegen der Wasserströmung bewegt. Diese eingeklappte Stellung ist in Figur 6 beispielhaft anhand einer gestrichelten Linie dargestellt. Bei eingeklappter Stellung der Flügelelemente 80 kann die Wasserströmung wesentlich stärker zwischen Flügelelementen 80 und dem Rotorblatt 20 entweichen, als bei hochgeklappter Position des Flügelelements 80, wodurch ein geringerer Druck auf die Rückseite 26 des Rotorblatts 20 wirkt. Das oder die Flügelelemente 80 können in bevorzugten Ausführungsformen im Bereich des ersten Abschnitts 40 (siehe Figur 1) angeordnet sein. Die Flügelelemente 80 können sich dabei entlang eines oder mehrerer Teilabschnitte oder durchgängig entlang der gesamten Länge der Ober- und/oder Unterkante 137, 138 des ersten Abschnitts 40 (Figur 1) des Rotorblatts 18 erstrecken. Sie können beispielsweise mittels einer Schwenkachse schwenkbar angelenkt sein und/oder aus einem elastischen Material gefertigt sein.

In Figur 6 sind außerdem Fluidschlitze 82 dargestellt, die an der Oberseite 72 und Unterseite 74 des Gehäuses 70 angeordnet sind. Die Fluidschlitze 82 haben ihre durch das Abdeckelement 88 ausgerichtete Öffnung so, dass sich eine Wasserströmung in die zweite Richtung 64 über den Fluidschlitz 82 hinweg bewegt. Aufgrund des Bernoulli-Effekts entsteht durch die Wasserströmung ein Sog, wodurch Wasser aus dem Gehäuse 70 durch den Fluidschlitz 82 heraus gesaugt wird. Wenn sich das Rotorblatt 18 in die zweite Richtung 64 gegen die Wasserströmung bewegt, wird dadurch die Rückführung des Rotorblatts 18 gegen die Wasserströmung erleichtert, da der Druck auf die Rückseite 26 des Rotorblatts 18 in diesem Bereich verringert wird. Eine Wasserströmung in die erste Richtung 63 kann durch die Öffnung in das Gehäuse 70 und auf die Vorderseite 24 des Rotorblatts 18 gelangen. Durch den zusätzlichen Eintrag von Wasserströmung auf die Vorderseite 24 des Rotorblatts 18 wird der Rotor effektiver angetrieben.

An der Ober- und Unterseite 72, 74 des Gehäuses 70 können alternativ auch mehrere Fluidschlitze 82 angeordnet sein, wie auch in den Beispielen in den Figuren 5 und 7 gezeigt wird.

Figur 7 zeigt die Wasserturbine 65 gemäß dem vierten Beispiel in einer Schnittdarstellung entlang der Linie VII-VII aus Figur 5. Darin sind Fluidschlitze 82 mit Abdeckelementen 88 dargestellt, die jeweils im Bereich, in dem sich die Außenseiten der Rotorblätter 18, 20 bewegen, an der Oberseite 72 und Unterseite 74 des Gehäuses 70 angeordnet sind. Da gerade der Bereich der Außenseiten der Rotorblätter 18, 20, fern der Drehachse, eine große Hebelwirkung aufweist, ist zusätzlicher Eintrag von Wasserströmung auf der Vorderseite und Abführen von Wasserströmung auf der Rückseite der Rotorblätter 18, 20 hier besonders effektiv. Bei den Fluidschlitzen 82, die in dieser Darstellung auf der linken Seite des Gehäuses 70 angeordnet sind, weist die Öffnung aus der Zeichenebene hinaus. Auf der in dieser Darstellung rechten Seite des Gehäuses 70 weisen die Öffnung der dort angeordneten Fluidschlitze 82 in die Zeichenebene hinein. Die mittig dargestellten Abdeckelemente 88 sind in einer Seitenansicht dargestellt, sie befinden sich im Hintergrund der Schnittlinie VII-VII aus Figur 5 und formen eine Öffnung für die dort angeordneten Fluidschlitze (in Figur 7 nicht sichtbar). In alternativen Ausführungsformen können die Fluidschlitze 82 auch oberhalb der oberen und unterhalb der unteren Nabeneinsenkungen 141, 142 bis in den Bereich der Drehachse 12 des Rotors 16 ausgebildet sein oder es können mehrere Fluidschlitze 82 nebeneinander angeordnet sein.

Die Schließelemente 62 sind wie in Figur 2 dargestellt, das heißt, am hier links dargestellten Rotorblatt 18 sind sie geschlossen dargestellt, welches einer Stellung entspricht, die die Schließelemente 62 einnehmen, wenn die Richtung der Wasserströmung in die erste Richtung 63 (Figur 1) weist und sich auch das Rotorblatt 18 in die erste Richtung 63 bewegt. Die Öffnungen 60, die durch die Schließelemente 62 verdeckt werden, sind mit gestrichelten Linien dargestellt. Die Schließelemente 62 am hier rechts dargestellten Rotorblatt 20 sind geöffnet, da sich das Rotorblatt 20 in die zweite Richtung 64 (Figur 1) entgegen der Wasserströmung bewegt. Durch die Öffnung 60 sieht man einen Teil des geöffneten Schließelements 62, welches sich, wie auch in Fig. 1 gezeigt, in die Zeichenebene hinein biegt.

Die Wasserturbine 65 gemäß dem vierten Beispiel der vorliegenden Erfindung kann alternativ zu Wasser auch mit jedem anderen Fluid, davon bevorzugt beispielsweise mit Luft betrieben werden.

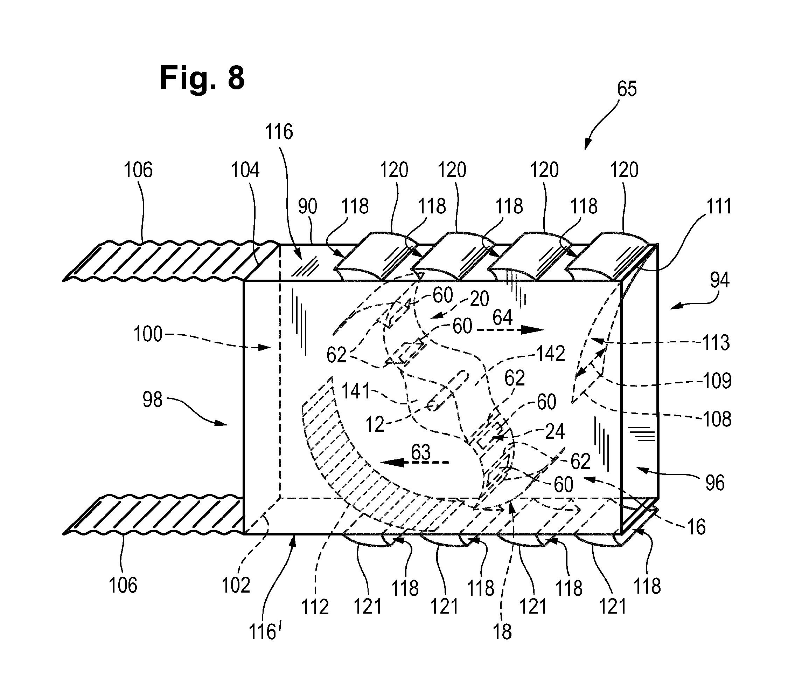

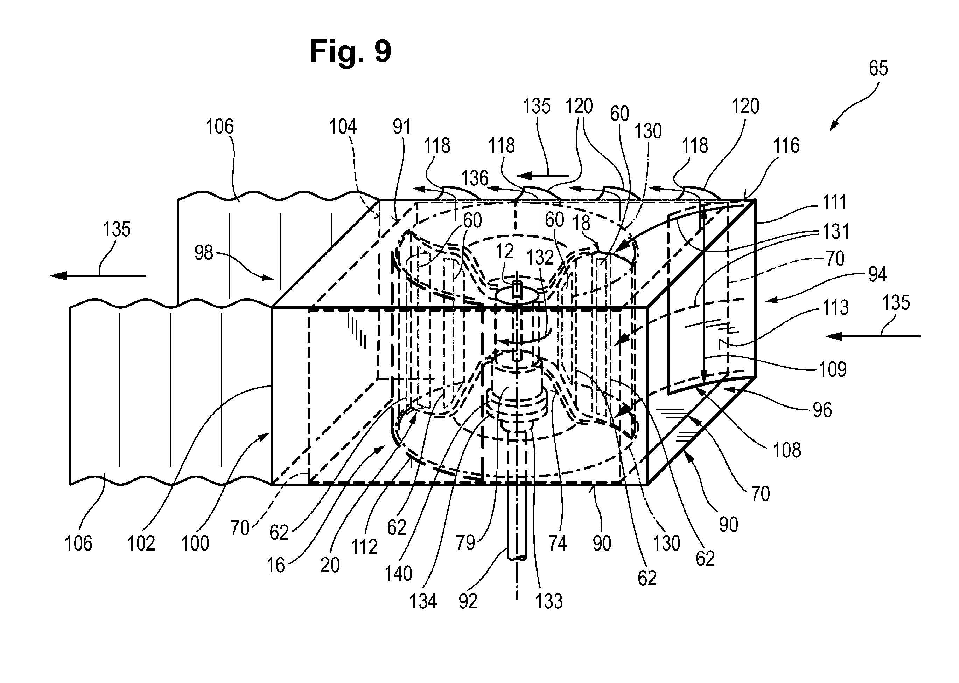

Figur 8 zeigt eine Wasserturbine 65 mit einem äußeren Gehäuse 90 gemäß einem fünften Beispiel der vorliegenden Erfindung in einer dreidimensionalen, ersten Ansicht und Figur 9 zeigt die Wasserturbine gemäß dem fünften Beispiel in einer dreidimensionalen, zweiten Ansicht. Die erste Ansicht gemäß Figur 8 entspricht einer Draufsicht, wobei die aus der Zeichenebene weisende Seite des äußeren Gehäuses 90 einer Oberseite 91 des äußeren Gehäuses 90 entspricht. Bei der zweiten Ansicht gemäß Figur 9 handelt es sich um eine Seitenansicht des äußeren Gehäuses 90. In dem in den Figuren 8 und 9 gezeigten Beispiel ist das erste Gehäuse 70 in dem quaderförmigen äußeren Gehäuse 90 angeordnet und das äußere Gehäuse 90 ist an einem vertikalen Stützmast 92 (Figur 9), der parallel zur Drehachse 12 des Rotors 16 ist, montierbar, beispielsweise mittels einer Muffe 133 und eines Flanschs 134. Das äußere Gehäuse 90 ist relativ zum Stützmast 92 drehbar. Das äußere Gehäuse 90 hat an einer parallel zur Drehachse 12 verlaufenden ersten Quaderseite 94 eine erste Öffnung 96, die als Wassereinlass fungiert, und an einer der ersten Quaderseite 96 gegenüberliegenden zweiten Quaderseite 98 eine zweite Öffnung 100 als Wasserauslass. Die erste und/oder zweite Öffnung 96, 100 kann, wie in Figuren 8 und 9 beispielhaft dargstellt, jeweils die ganze erste bzw. zweite Quaderseite 94, 98 einnehmen, oder nur einen z. B. rechteckig oder kreisförmig ausgebildeten Teilbereich der ersten bzw. zweiten Quaderseite 94, 98. Das äußere Gehäuse 90 steht bevorzugt im Bereich des Wasserein- und Wasserauslasses über das innere Gehäuse 70 hinaus.

Dadurch, dass das äußere Gehäuse 90 drehbar an dem Stützmast 92 angeordnet ist, kann es sich ähnlich einer Windfahne ohne Motorunterstützung in der Wasserströmung drehen, so dass die Wasserströmung durch die erste Quaderseite 94 auf die Rotorblätter 18, 20 trifft. Im hier dargestellten Beispiel sind zwei Rotorblätter 18, 20 dargestellt, der Rotor 16 kann aber alternativ auch drei, vier, fünf oder mehr Rotorblätter umfassen.

An der zweiten Quaderseite 98 ist in dem in den Figuren 8 und 9 dargestellten Beispiel an den parallel zur Drehachse 12 des Rotors 16 verlaufenden Kanten 102, 104 jeweils ein Flaggenelement 106 angeordnet. Damit kann das äußere Gehäuse 90 noch optimaler in der Wasserströmung ausgerichtet werden. In alternativen Ausführungsformen kann auch nur an einer der beiden Kanten 102, 104 ein Flaggenelement 106 angeordnet sein oder auch an einer der oder beiden senkrecht zur Drehachse 12 des Rotors 16 verlaufenden Kanten. Das Flaggenelement 106 kann statt einteilig auch mehrteilig ausgeführt sein, wobei die einzelnen Teile des Flaggenelements 106 entlang der jeweiligen Kante 102, 104 der zweiten Quaderseite 98 verteilt sind.

Im Bereich des Wassereinlasses des äußeren Gehäuses 90 ist in dem Ausführungsbeispiel der Figuren 8 und 9 ein Ablenkelement 108 angeordnet. Das Ablenkelement 108 weist eine Höhe 109 auf, die im Wesentlichen der Höhe der ersten Quaderseite 94 parallel zur Drehachse 12 des Rotors 16 entspricht. Das Ablenkelement 108 geht von einer seitlichen Kante 111 der ersten Quaderseite 94, die parallel zur Drehachse 12 des Rotors 16 verläuft, aus und verläuft leicht gebogen von der Ebene der ersten Quaderseite 94 weg ins Innere des äußeren Gehäuses 90, wobei die konkave Seite 113 des Ablenkelements 108 nach außen, das heißt in Richtung der Ebene der ersten Quaderseite 94, zeigt. Auf diese Weise wird die Wasserströmung größtenteils auf das sich im Betrieb in die erste Richtung 63 in Richtung der Wasserströmung bewegende Rotorblatt 18, 20 geleitet, und das sich im Betrieb in die zweite Richtung 64 entgegen der Wasserströmung bewegenden Rotorblatt 18, 20 ist der Wasserströmung größtenteils nicht ausgesetzt, da es durch das Ablenkelement 108 abgeschirmt ist. Die Umlenkung 131 des Wassers 135 am Wassereinlass wird durch Pfeile dargestellt. Durch das Ablenkelement 108 entsteht eine Verengung des Wassereinlasses an der ersten Quaderseite 94, wodurch der Venturi-Effekt erzeugt wird und die Wasserströmung in Richtung des Rotorblatts 18, 20, welches sich in die erste Richtung 63 bewegt, beschleunigt.

Außerdem umfassen die Rotorblätter 18, 20 jeweils zwei Öffnungen 60 mit öffenbarem Schließelement 62, welches die Öffnung 60 verschließt, wenn die Wasserströmung auf das sich in die erste Richtung 63 bewegende Rotorblatt 18, 20 trifft, und welche geöffnet sind, wenn sich das Rotorblatt 18, 20 in die zweite Richtung 64 entgegen der Richtung der Wasserströmung bewegt. Im hier gezeigten Beispiel sind bei dem unten dargestellten Rotorblatt 18 die Öffnungen 60 verschlossen, während bei dem oben dargestellten Rotorblatt 20 die Öffnungen 60 geöffnet sind.

Das erste, innere Gehäuse 70 umfasst in dem in Figur 8 und Figur 9 dargestellten Ausführungsbeispiel parallel zur Drehachse 12 einen mit der Ober- und Unterseite 72, 74 des ersten Gehäuses 70 verbundenen Flächenabschnitt 112, der entsprechend dem Drehkreis 130 (Figur 9) der Rotorblätter 18, 20 gebogen und im äußeren Gehäuse 90 diagonal zum Ablenkelement 108 angeordnet ist. Das sich in die erste Richtung 63 bewegende Rotorblatt 18, 20 passiert somit den Flächenabschnitt 112, bevor es sich, der Drehrichtung 132 des Rotors 16 folgend, in die zweite Richtung 64 bewegt. Der Druck der Wasserströmung auf die Vorderseite 24 (Figur 1) des Rotorblatts 18, 20 wird somit aufrecht erhalten, da die Wasserströmung erst aus dem Wasserauslass entweichen kann, wenn das Rotorblatt 18, 20 den Flächenabschnitt 112 passiert hat. Die Drehrichtung 132 entspricht der Vorzugsdrehrichtung des Rotors 16.

In alternativen Ausführungsformen kann auch nur das Ablenkelement 108 oder nur der Flächenabschnitt 112 in dem äußeren Gehäuse 90 angeordnet sein.

In Figur 8 sind an den parallel zur Drehachse 12 des Rotors 16 verlaufenden ersten und zweiten Seitenwand 116, 116' jeweils vier Fluidöffnungen 118 angeordnet, die an der ersten Seitenwand 116 jeweils durch ein Fluidabweiselement 120 und an der zweiten Seitenwand 116' jeweils durch ein Fluidansaugelement 121 überdeckt werden. In Figur 9 werden die mit Fluidabweiselementen 120 überdeckten Fluidöffnungen 118 wegen der Übersichtlichkeit nur an der ersten Seitenwand 116 angedeutet. Die Fluidabweiselemente 120 sind derart angeordnet, dass sie in Richtung der ersten Quaderseite 94 einen stumpfen Winkel aufweist. Die an den Fluidöffnungen 118 außen an der ersten Seitenwand 116 des äußeren Gehäuses 90 vorbei strömende Wasserströmung, in Figur 9 als Wasser 135 mit einem Pfeil dargestellt, erzeugt den Bernoulli-Effekt, wodurch Wasser aus dem Inneren des äußeren Gehäuses 90 durch die Fluidöffnungen 118 heraus gesaugt wird und sich in Richtung der Wasserströmung, das heißt in die erste Richtung 63 bewegt. Dieser Saugstrom 136 wird hier beispielhaft durch Pfeile dargestellt. Dadurch verringert sich der Wasserwiderstand für das sich in die zweite Richtung 64 bewegende Rotorblatt 18, 20. Durch die Fluidabweiselemente 120 wird die Wasserströmung an der ersten Seitenwand 116 beschleunigt, wodurch der Bernoulli-Effekt verstärkt wird. In alternativen Ausführungsformen können auch nur eine oder mehrere Fluidöffnungen 118 ohne Fluidabweiselement 120 an der ersten Seitenwand 116 angeordnet sein. An der der ersten Seitenwand 116 gegenüber liegenden zweiten Seitenwand 116' sind die Fluidöffnungen 118 durch ein Fluidansaugelement 121 überdeckt, welches einen stumpfen Winkel in Richtung der zweiten Quaderseite 98 aufweist. Durch die Fluidöffnungen 118 mit den Fluidansaugelemente 121 wird zusätzlich Wasser in das äußere Gehäuse 90 gedrückt und so der Druck auf das Rotorblatt 18, 20, das sich in die erste Richtung 63 bewegt, erhöht. Die oder jede Fluidöffnung 118, gegebenenfalls in Kombination mit einem Fluidabweiselement 120 oder einem Fluidansaugelement 121 kann optional auch an anderen Seitenwänden des äußeren Gehäuses 90 angeordnet sein, um beispielsweise durch die Wasserströmung Wasser aus dem äußeren Gehäuse 90 zu saugen bzw. vermehrt in das äußere Gehäuse 90 einzubringen. In alternativen Ausführungsformen können anstelle von vier Fluidöffnungen 118 an jeweils der Seitenwände 116, 116' auch nur eine, zwei, drei oder fünf oder mehr Fluidöffnungen und optional eine entsprechende Anzahl an Fluidabweiselementen 120 bzw. Fluidansaugelementen 121 vorgesehen sein. Die Fluidöffnungen 118 können auch nur an einer der Seitenwände 116, 116' angeordnet und je nach Bedarf mit Fluidabweiselementen 120 oder Fluidansaugelementen 121 überdeckt sein. Die Anzahl der Fluidöffnungen und Fluidabweiselemente bzw. Fluidansaugelemente muss nicht zwingend miteinander übereinstimmen.

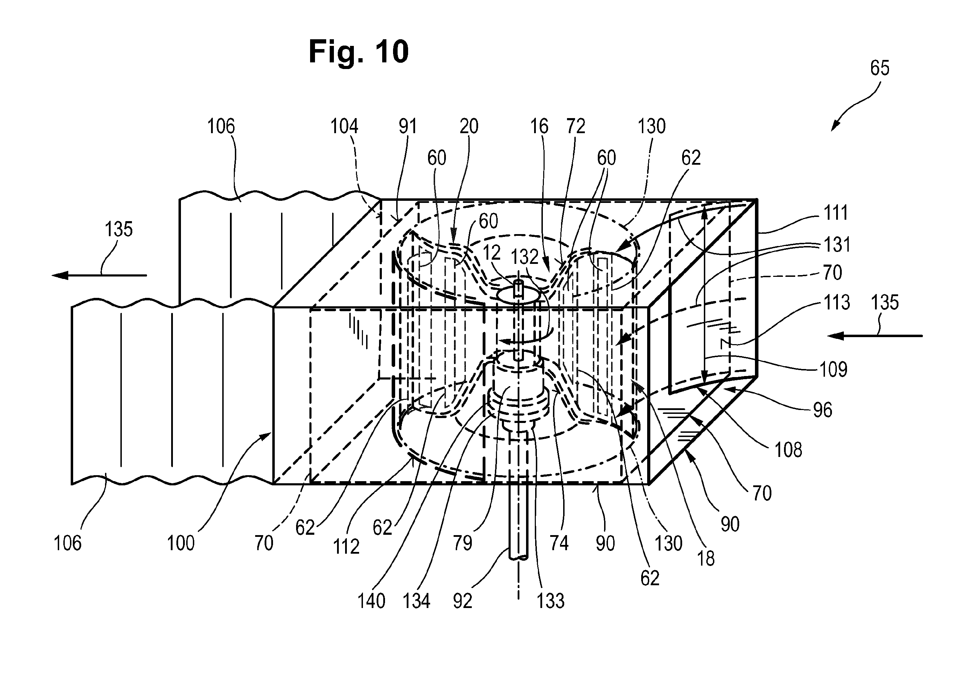

Das äußere Gehäuse 90 kann in alternativen Ausführungsformen auch ohne Fluidöffnungen 118 und/oder Fluidabweiselemente 120 und/oder Fluidansaugelemente 121 ausgeführt sein, wie es als sechstes Ausführungsbeispiel der vorliegenden Erfindung in Figur 10 gezeigt ist. Die in Figur 10 gezeigte Wasserturbine 65 entspricht der Wasserturbine 65 aus Figuren 8 und 9, nur ohne Fluidöffnungen 118 und Fluidabweiselemente 120 bzw. Fluidansaugelemente 121.

Die Wasserturbinen 65 aus dem fünften und sechsten Ausführungsbeispiel eignet sich auch für den Betrieb mit einem anderen Fluid als Wasser, beispielsweise mit Luft.

### Bezugszeichenliste

- 12: Drehachse
- 16: Rotor
- 18: Rotorblatt
- 20: Rotorblatt
- 22: Rotorblatt
- 24: Vorderseite
- 26: Rückseite
- 40: erster Abschnitt
- 42: konkave Seite
- 44: konvexe Seite
- 46: Ende des ersten Abschnitts
- 50: zweiter Abschnitt
- 52: konkave Seite
- 54: konvexe Seite
- 56: Winkel
- 60: Öffnung
- 61: Fähnchenelement
- 62: Schließelement
- 63: erste Richtung
- 64: zweite Richtung
- 65: Wasserturbine
- 66: zweite Höhe
- 67: zweiter Abstand
- 68: erste Höhe
- 69: erster Abstand
- 70: Gehäuse
- 72: Oberseite
- 73: Längsachse
- 74: Unterseite
- 76: zweiter Abstand
- 77: Hohlraum
- 78: erster Abstand
- 79: Generator
- 80: Flügelelement
- 81: Außenkanten
- 82: Fluidschlitz
- 83: Durchmesser
- 84: Durchmesser
- 85: Abstand
- 86: Stützelemente
- 87: Stützelemente
- 87': Stützelemente
- 88: Abdeckelement
- 90: äußeres Gehäuse
- 91: Oberseite
- 92: Stützmast
- 93: hinteres Ende des Fluidschlitzes
- 94: erste Quaderseite
- 96: erste Öffnung
- 98: zweite Quaderseite
- 100: zweite Öffnung
- 102: Kante
- 104: Kante
- 106: Flaggenelement
- 108: Ablenkelement
- 109: Höhe
- 111: seitliche Kante
- 112: Flächenabschnitt
- 113: konkave Seite
- 116: Seitenwand
- 116': Seitenwand
- 118: Fluidöffnung
- 120: Fluidabweiselement
- 121: Fluidansaugelement
- 122: Tragelement
- 130: Drehkreis
- 131: Umlenkung der Wasserströmung
- 132: Drehrichtung des Rotors
- 133: Muffe
- 134: Flansch
- 135: Wasser
- 136: Saugstrom
- 137: Oberkante
- 138: Unterkante
- 139: Rückseite des Flügelelements
- 140: Generatorflansch
- 141: obere Nabeneinsenkung
- 142: untere Nabeneinsenkung

## Patentansprüche

1. Rotor mit
- einer vertikalen Drehachse,
- mindestens zwei Rotorblättern, die an der Drehachse angeordnet sind, wobei mindestens ein Rotorblatt (18, 20, 22) mindestens eine Öffnung (60) mit einem öffenbaren Schließelement (62) umfasst, **dadurch gekennzeichnet, dass** an einer Oberkante (137) und/oder an einer Unterkante (138) von mindestens einem Rotorblatt (18, 20, 22) jeweils mindestens ein Flügelelement (80) beweglich angeordnet ist.

2. Rotor nach Anspruch 1, **dadurch gekennzeichnet, dass** jedes Rotorblatt (18, 20, 22) mindestens eine Öffnung (60) mit einem öffenbaren Schließelement (62) umfasst.

3. Rotor nach Anspruch 1 oder 2, **dadurch gekennzeichnet, dass** mindestens ein Rotorblatt (18, 20, 22) einen gekrümmten ersten Abschnitt (40) umfasst, wobei der erste Abschnitt (40) eine konkave Seite (42) und eine konvexe Seite (44) aufweist, und dass an dem der Drehachse (12) abgewandten Ende (46) des ersten Abschnitts (40) des Rotorblatts (18, 20, 22) ein gekrümmter zweiter Abschnitt (50) angeordnet ist, wobei der zweite Abschnitt (50) eine konkave Seite (52) und eine konvexe Seite (54) aufweist, und wobei die beiden Abschnitte (40, 50) derart angeordnet sind, dass in radialer Richtung auf die konvexe Seite (44) des ersten Abschnitts (40) die konkave Seite (52) des zweiten Abschnitts (50) folgt, und wobei der erste Abschnitt (40) die mindestens eine Öffnung (60) mit dem öffenbaren Schließelement (62) umfasst.

4. Rotor nach Anspruch 3, **dadurch gekennzeichnet, dass** ein zwischen der konvexen Seite (44) des ersten Abschnitts (40) und der konkaven Seite (52) des zweiten Abschnitts (50) eingeschlossener Winkel (56) kleiner als 120° ist.

5. Rotor nach einem der Ansprüche 1 bis 4, **dadurch gekennzeichnet, dass** an der Seite (54) des des Rotorblatts (18, 20, 22) mindestens ein Fähnchenelement (61) beweglich angeordnet ist.

6. Rotor nach einem der Ansprüche 1 bis 5, **dadurch gekennzeichnet, dass** mindestens ein Rotorblatt (18, 20, 22) mindestens eine erste Höhe (68) in einem ersten Abstand (69) parallel zur Drehachse (12) und eine zweite Höhe (66) in einem zweiten Abstand (67) parallel zur Drehachse (12) aufweist, wobei der erste Abstand (69) und die erste Höhe (68) kleiner sind als der zweite Abstand (67) und die zweite Höhe (66).

7. Fluidturbine mit einem Rotor nach einem der Ansprüche 1 bis 6,
wobei der Rotor in einem Gehäuse (70) angeordnet ist,
wobei eine Oberseite (72) und eine Unterseite (74) des Gehäuses (70) im wesentlichen senkrecht zur Drehachse (12) angeordnet sind,
**dadurch gekennzeichnet, dass** der Rotor (16) relativ zum Gehäuse (70) drehbar ist, wobei das Gehäuse (70) mindestens einen ersten Abstand (78) zwischen Ober- und Unterseite (72, 74) des Gehäuses (70) in einem ersten Abstand (69) parallel zur Drehachse (12) und einen zweiten Abstand (76) zwischen Ober- und Unterseite (72, 74) des Gehäuses (70) in einem zweiten Abstand (67) parallel zur Drehachse (12) aufweist, wobei der erste Abstand (69) parallel zur Drehachse (12) und der erste Abstand (78) zwischen Ober- und Unterseite (72, 74) des Gehäuses (70) kleiner sind als der zweite Abstand (67) parallel zur Drehachse (12) und der zweite Abstand (76) zwischen Ober- und Unterseite (72, 74) des Gehäuses (70).

8. Fluidturbine nach Anspruch 7, **dadurch gekennzeichnet, dass** der Abstand (85) zwischen der Oberseite (72) des Gehäuses (70) und den Rotorblättern (18, 20, 22) und zwischen der Unterseite (74) des Gehäuses (70) und den Rotorblättern (18, 20, 22) im Wesentlichen konstant ist.

9. Fluidturbine nach Anspruch 7 oder 8, **dadurch gekennzeichnet, dass** an der Oberseite (72) und/oder der Unterseite (74) des Gehäuses (70) mindestens ein Fluidschlitz (82) angeordnet ist.

10. Fluidturbine nach einem der Ansprüche 7 bis 9, **dadurch gekennzeichnet, dass** das erste Gehäuse (70) in einem quaderförmigen äußeren Gehäuse (90) angeordnet ist, wobei das äußere Gehäuse (90) an einem vertikalen Stützmast (92) montierbar und relativ zum Stützmast (92) drehbar ist,
wobei die Drehachse (12) des Rotors (16) parallel zum Stützmast (92) ist,
wobei das äußere Gehäuse (90) an einer parallel zur Drehachse (12) verlaufenden ersten Quaderseite (94) eine erste Öffnung (96) als Fluideinlass und an einer der ersten Quaderseite (96) gegenüberliegenden zweiten Quaderseite (98) eine zweite Öffnung (100) als Fluidauslass umfasst.

11. Fluidturbine nach Anspruch 10, **dadurch gekennzeichnet, dass** das äußere Gehäuse (90) an mindestens einer parallel zur Drehachse (12) des Rotors (16) verlaufenden Kante (102, 104) der zweiten Quaderseite (98) ein Flaggenelement (106) umfasst.

12. Fluidturbine nach Anspruch 10 oder 11, **dadurch gekennzeichnet, dass** im Fluideinlass ein Ablenkelement (108) angeordnet ist.

13. Fluidturbine nach Anspruch 12, **dadurch gekennzeichnet, dass** das erste Gehäuse (70) parallel zur Drehachse (12) einen mit der Ober- und Unterseite (72, 74) des Gehäuses (70) verbundenen Flächenabschnitt (112) umfasst, der entsprechend dem Drehkreis der Rotorblätter (18, 20, 22) gebogen und im äußeren Gehäuse (90) diagonal zum Ablenkelement (108) angeordnet ist.

14. Fluidturbine nach einem der Ansprüche 10 bis 13, **dadurch gekennzeichnet, dass** das äußere Gehäuse (90) an mindestens einer parallel zur Drehachse (12) des Rotors (16) verlaufenden Seitenwand (116, 116') mindestens eine Fluidöffnung (118) umfasst.

15. Fluidturbine nach Anspruch 14, **dadurch gekennzeichnet, dass** an der Seitenwand (116, 116') mindestens ein die Fluidöffnung (118) überdeckendes Fluidabweiselement (120) und/oder Fluidansaugelement (121) angeordnet ist, das in Richtung der ersten Quaderseite (94) bzw. der zweiten Quaderseite (98) einen stumpfen Winkel aufweist.
